# EUROPEAN PATENT APPLICATION

(11) **EP 2 441 321 A2**
(43) Date of publication of application: **18.04.2012**
(21) Application number: 11184993.1
(22) Date of filing: 13.10.2011
(51) Int. Cl.: A01B 79/00, A01G 3/04, A01D 46/28

(54) **Agricultural device to support and handle different operating units adapted to work on rows located on flat lands or hills**

(30) Priority: 13.10.2010 IT MN20100020
(71) Applicant: Guerrieri Gonzaga, Edoardo, 46030 Sustinente (Mantova) (IT); Guerrieri Gonzaga, Aliana, 20129 Milano (IT)
(72) Inventor: Guerrieri Gonzaga, Edoardo, 46030 Sustinente (Mantova) (IT)
(74) Representative: Gustorf, Gerhard

(57) **Abstract**

The agricultural equipment which is presented is bilateral, multi-function and with multiple possibilities in terms of application, applied to the lifting of a vehicle that travels on a row (2,2') of trees, aimed to support operative interventions such as pre-pruning, trimming, and spraying on rows (2,2') of trees, particularly vineyards, orchards and hedges on plains and hills and is characterized by a transverse parallelogram (3,5,5') deformable structure with lateral pillars (5,5') maintained vertical and extensible, capable to support, position and manage motorized and passive units (8,9), with the possibility to perform different installments, which can include the automation of the temporary variation of the positioning of the units (8,9), determined by sensors of different types and functions, which signals are implemented by a programmable electric central unit.

## Description

### DEFINITION

Agricultural equipment suitable to support and manage multiple operating units aimed to work on different rows of plains and hills, including automation.

### DESCRIPTION OF THE INDUSTIAL INVENTION

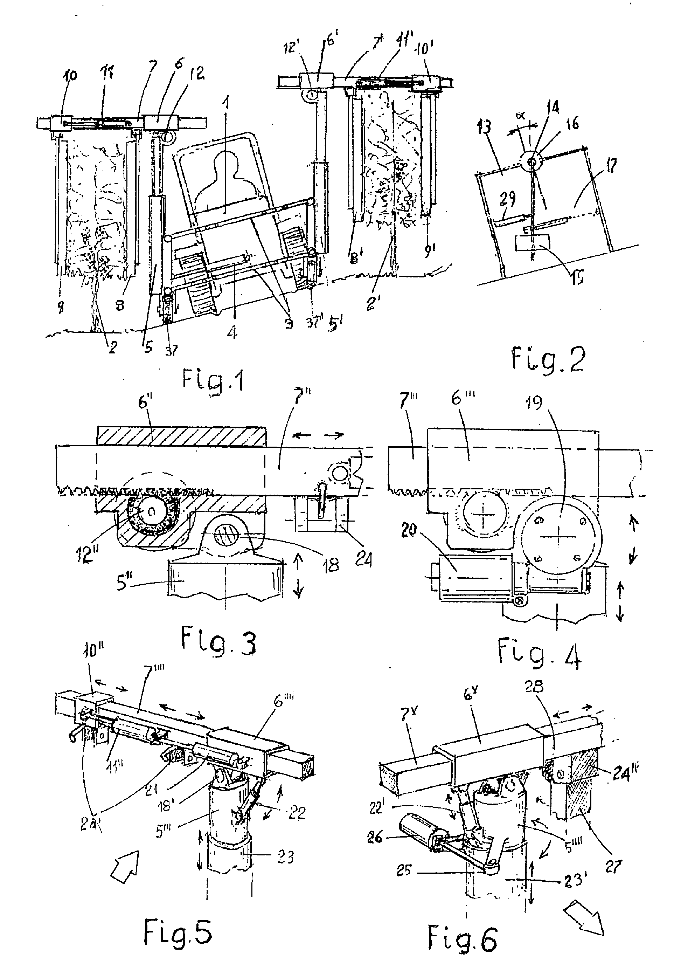

Agricultural equipment bilateral-multilateral, multi-function and with multiple possibilities in terms of application, applied directly to the lifting of the front or of the rear of a tractor or other vehicle, aimed to support, locate and manage, alternatively, several motorized and passive operating units, which are not described here, which affect: the foot, the stems and the foliage of the rows of plants, particularly of vineyards and orchards, characterized by a transverse parallelogram deformable structure with lateral pillars maintained vertical and extensible, which allows, by the usage of jointed arms, operations on plains and hilly implants, implants that follow the line of maximum slope and transversal (Fig. 1), using hydro-mechanical and / or electromechanical actuators controlled by the operator for the basic positioning, specific of the orchard, automatically performing slight and temporary variations to the positioning, in order to avoid collisions, with damage to plants and / or to equipments, using the same actuators, managed by appropriate sensors through PLC or programmable electronic control unit as detailed in the preamble of claim No. 1. The invention is also characterized by the ability to create different configurations of features and automation, depending on the applications performed by the user.

There are patents currently known, as DE19645615 A1 of 07/05/1998, applied in front of the tractor, operator-managed, characterized by a central tilting pillar, hinged at the bottom and extendable, bearing a top bunk with a complex structure operated with different hydraulic jacks forming a portal, equipped to intervene on both sides of a row; similarly the patent EP 2158806 A1 with priority of 01/09/2008 AT 13572008 and the French patent Registry No. 9907385 filed on 09/06/1999. The German patent DE4004247 A1, filed on 14/08/1991, regards a semi-mounted tool sliding obliquely, capable of processing of multiple plain agricultural crops between rows, equipped with different types of sensors (mechanical, capacitive, inductive, optical, sonar sided, infrared double-sided, double sided laser, etc.). Currently there are no known support agricultural equipment designed to intervene with different operational units, in tree planting displayed in rows of plain or hill and contemporary intervention bifilar and double sided; similarly there is no known equipment designed to automatically modify its geometry according to the setting chosen in response to changes in external conditions perceived by appropriate airborne sensors.

The invention herein analyzed contains many innovative and radical elements, which can be applied all together or in part, depending on the different configurations, which are described as follows:
**a.** Regarding the **functionality** as:
   **a1.** the equipment substantially includes a base structure conformed as a deformable parallelogram of variable width with the top side attached to the front or to the back, directly to the lifting of a vehicle, characterized by the inclusion of two side pillars maintained vertical, extendible in height, each bearing, fixed on top and removable, a head which can be tilted towards the rows, equipped with jointed arms, also extendible (see patent application filed February 10, 2010ITMN2010A000001 cod. EP 2353371 A1) which are able to support and position various types of operating units with various solutions: bilateral - for mono-facial interventions or bifacial with tree row overlaying (see our patent EP 2361496 A1) equipped, according to the specific intervention with motorized units, such as trimmers, leaf-strippers, side shoot removers, and dry pruners, or with passive units as spraying units of pressurized liquids from tanks carried or towed, alternatively applicable on the equipment, which is the object of the invention.
   **a2.** Actuators of placements and motors (which, by themselves can be considered renowned) are hydraulic or electromechanical, with the power connections to the motors and actuators to control hydraulic or electromechanical, common to the various units and connected to centralized power distribution boxes placed on the vehicle.
   **a3.** The head of each pillar rotates backwards, manually / with the hydraulic actuator, according to the specification, for about 90° in order to reduce the overall width obstruction during journeys on streets and while entering the rows.
**b.** In relation to the **application areas** as:
   **b1**. in its "universal" version, the equipment allows to operate in reared back, hilly and plains implants, since the operating units and the sensors placed before the pillars are maintained vertical thanks to the aforementioned electronic control unit, via one or more hydraulic jack/s applied to the rear lifting equipment; the equipment is swayed on the lower arms of the lifting system through implants that follow the line of maximum slope but also in transverse implants (with isohypse) as the basic equipment consists of a deformable and extendable parallelogram, as stated in point **a1**, since the hydraulic jack allows the movement of the bottom rail.
   **b2**.the deformable parallelogram is fitted with wheels fixed to the base of the pillars that stand on the ground, ensuring the self-leveling in height of the head units that support the right and left jointed arms and its kinematic mechanism causes, in isohypse implants, the valley wheel to move downstream, automatically expanding the base of support and countering the tendency to roll;
   **b3**. The support wheels can be coupled with hard thin edge/serrated, fixed to the rim, on a diameter equal to the pneumatic support wheels (Fig.5) in order to counteract the tendency to slip down the valley on frail grounds;
   **b4**.for some applications, such as spraying the foliage, it is designed that the jointed arms of the head of the pillars are opportunely conformed in order to support, in GDC or arbour implants, horizontal operating units, facing downwards and/or upwards, which are able to operate under or over the foliage in order to complete the vertical operating units;
**c.** In relation to the management of the **placement of operating units** because: the invention provides **two** types of positioning and handling:
   **c.1 basic or regular placements** for "that implant and that intervention" , pre-determined by the operator that controls hydro mechanical (hydraulic jacks) or electromechanical (electric motor groups step-step/ crown wheel gauge line) actuators, places the operating units according to the width of the tree rows, the height and thickness of the foliage, transverse inclinations of the ground, asymmetry of the foliage or of the intervention (these positions must be reversed when the direction of the journey is inverted);
   **c2. temporary variations** of the aforementioned positions due to localized external causes that change the usual space between rows , such as: misalignment of one or more plants, deviations from the ideal driving line of the operator that leans towards one row or the other, lateral inclination of some plants as a result of the action of winds or subsidence of the land; these are generally of limited extent, to be carried out by the operator or automatically, according to various installments; the automatic variations determined by the lateral distance sensors on operating units/trunks. The automatic corrective intervention is performed when the anomalies exceed the tolerances established by the operator (eg, about 5-10 cm lateral distance and ± 2-3° on the slopes of the trees).
**d.** With regard to the **level of automation** of the chosen installment:
   as it is provided that there are sensors capable to react to external conditions (sensors of presence, distance, asymmetry) compared to the settings, which transmit the information to the programmable electronic control unit (EPC), signals that are interpreted and transformed into commands to the actuators without the need of the operator's intervention (summarized in Table 1) as provided in claim No.1 and described as follows:
      **d1.** sensors that react to the distance between devices and stems, of mechanical type (contact) but preferably without contact, which is to say airborne sensors (eg laser, ultrasonic, etc.), however, capable to temporarily vary the position of the operating units, with respect to basic settings as described above in point c2;
      **d2**.longitudinal tilt sensor (inclinometer)in implants that follow the line of maximum slope, (which, by itself, can be considered renowned), summarized in Fig. 2 for the automatic recovery of the upright position of the pillar and of the operating units, since stems normally grow vertical;
      **d3**. tilt sensor (inclinometer, see above d2) in a transversal plane, in isohypse implants, to ensure that the pillars are maintained vertical with the operating units, with the varying of the pendency, and to self-level the equipment at the height of the rows upstream and downstream (right and left) of the rows of trees;
      **d4**. inversion of travel sensor, of electric type, connected to the steering of the vehicle, capable to readjust the geometry of the operating units in implants that present asymmetric foliage with respect to the trunks;
      **d5**. electrical sensors proportional to the inclination of any angle of each beam supporting the operating units, resulting from collisions with bodies hanging from the foliage, resulting in reports to the operator and / or, according to the installment, the stopping of the vehicle;
      **d6**. optical sensors of presence / absence of foliage, such as cameras, giving rise to the arrest of the operational units in particular those of spraying the foliage avoiding waste and reducing environmental impact;
      **d7**.counters of passed trunks such as cameras with standard dynamic memory (eg, 10 trunks) of waste with highlight margin from tolerance, in order to let the operator distinguish the trends and / or causes;
**e.** With regard to the ease to create **different installments** in relation to: the automatic devices (sensors and actuators) depending on the use, the user's needs and affordability, for example the exclusive use on plain land does not require the installment of inclinometers and allows to exclude the fixed parallelogram to support overlaying arms.

What has been said above, will result cleared to the experts in this art, by examining the figures from 1 to 11, shown in the attached two tables, and the (Table 1) attached to the first claim, which shows the correlation between the function of the actuators and the operational situations and an indication of the types of sensors considered, which list is, however just shown as a non exhaustive example. Fig. 1 schematically shows the back view of a crawler tractor, with equipment applied to the rear lifting system, used for hilly isohypse implants: with 1 it is indicated the outline of the tractor, inserted between two adjacent rows of 2 and 2', the base of the equipment is portrayed with n. 3, with the bottom rail inclined due to the action of the hydraulic jack (n. 4) managed by the operator or automatically by an inclinometer, to maintain the vertical side pillars 5, 5 '.

Above the pillars 5, 5 ', extendable in height, which stand on the ground with the free wheels 43 on the left and 43' to the right, moved to the valley by the inclination of the parallelogram, the rotating heads 6 and 6', through which the extendable jointed arms 7, 7 ' sway; the jointed arms hold, orient locate and manage the portals with the operating units here schematically shown in vertical mirror pairs 8, 9 left and 8', 9' right, the external 9 and 9' overlaying the rows and controlled by hydraulic jack DE 11, 11' acting on the sliding sleeves 7, 7', varying the distance between pairs of units. In Fig. 2 it is shown a functional diagram of pendulum inclinometer 15, swaying according to a longitudinal plane available for implants that follow the line of maximum slope or transversal for the isohypse; there can be noticed the pneumatic damper of fluctuation 29, the tilt measuring device 17, which transmits the signal to the PLC or electronic control unit; electronic inclinometers are currently known, available and easy to apply.

The movements of transverse tilt-back of the equipment and of the extension-retraction of the arms 7 and 7', in Figures 3 and 4 include electromechanical actuators, respectively with geared spool rack for sliding arm 7‴ and hinged with screw without end and geared sector 19 activated by the motor 20 for tilting the head of the whole-arm 7"and the support 24 for the pole that supports the operating unit inside the row; in the transverse plane, hydraulic jacks DE 9.9' ensure the spacing of the units outside the row as 10", for the external units (work lights). Fig. 5 shows alternative solutions to 3 and 4, with hydraulic jacks DE 21 for the sliding of the arm 7"', and 22, which provides the inclination of the head 6"'. In Fig.6 it is portrayed a solution with the hydraulic jack DE 26 which engages with the arm 25 of upper part of the vertical pillar, in order to rotate the head 6 of 90°, with arm 7, during the journeys on streets. Fig. 7 shows a side view of the tractor 30, operating in a vineyard implant that follow the line of maximum slope , and, schematized, the lifting of the rear, with the lower lifting arms rigid and parallel to each other and the upper arm 32, consisting in the hydraulic jack DE which allows the swaying of the equipment about the hinge of the lower arms to ensure the verticality of the pillars 31, which hold the operating units, such as the drums 33.

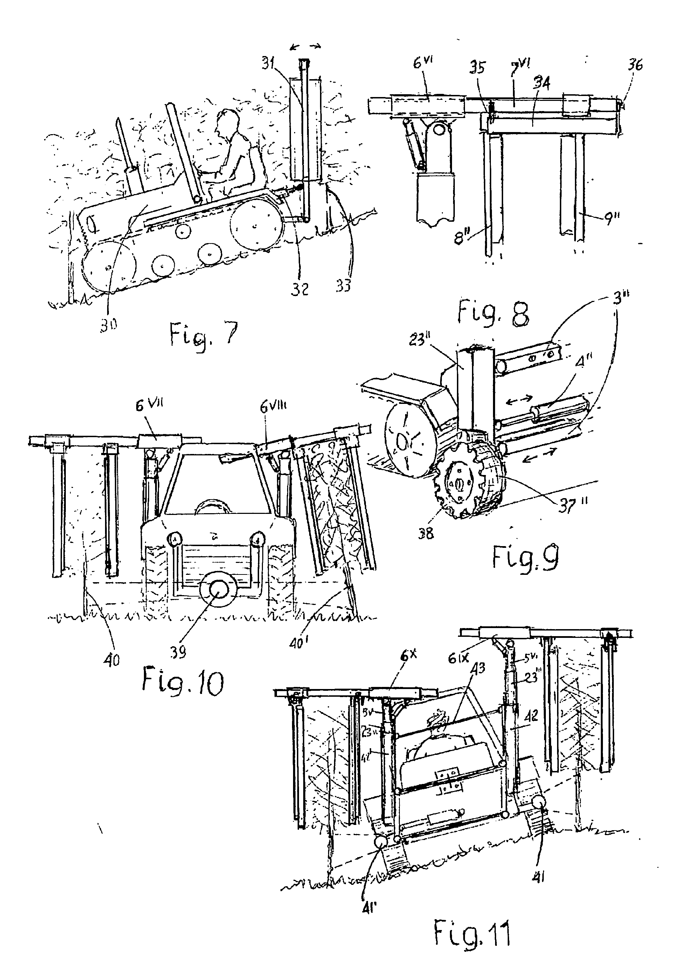

Fig. 8 summarizes the application of a cross hanging operating unit 34, hanging from the upper extension arm 7 in 35 and 36, suitable to be uses in operations such as trimming or spraying the foliage in GDC implants. Fig. 9 illustrates the application of the thin geared disk 38 to the wheel 37 downstream, supporting the pillar 23', which leans to the ground with an anti-skid function, in an isohypse implant; a similar disc is applied to the wheels towards the mount, that reverse the direction of the travel. Fig.10 shows the solution of the measuring of distance from the trunks 40 and 40 'and / or of their possible lateral inclination in a plain implant, with a single laser sensor with central horizontal axis 39, highlighting the limits of the lower / upper detection obtained from the software of the central electric unit, which can be programmed appropriately shielding, realizing with a single laser device the measurement of the distance and of the angle of the trunks, such as 40', which the central electric unit transforms directly into commands for the concerned actuators. Fig. 11 presents the application in hilly isohypse implants that require two unilateral sensors of distance and trunk inclination placed before the deformable parallelogram, which supports the distance sensors like 41 and 41', each managed by the aforementioned central electric unit; it also shows the additional tilting equipment 43stiffening the lateral pillars 42, 42'. To eliminate any interference caused by the detection of hanging material from the foliage, static suitably shaped guides are placed before the sensors, in order to deviate them, uplifting them, before the intervention.

The above mentioned description, indicated in table 1 of the firs claim, shown in the Figures and hereby claimed, must be intended as an example, limited to the mechanical aspects and with the omission of details, especially in relation to the installment, as it is common knowledge in the field of manufacturers and subj ect to modification, without affecting the features of the invention.

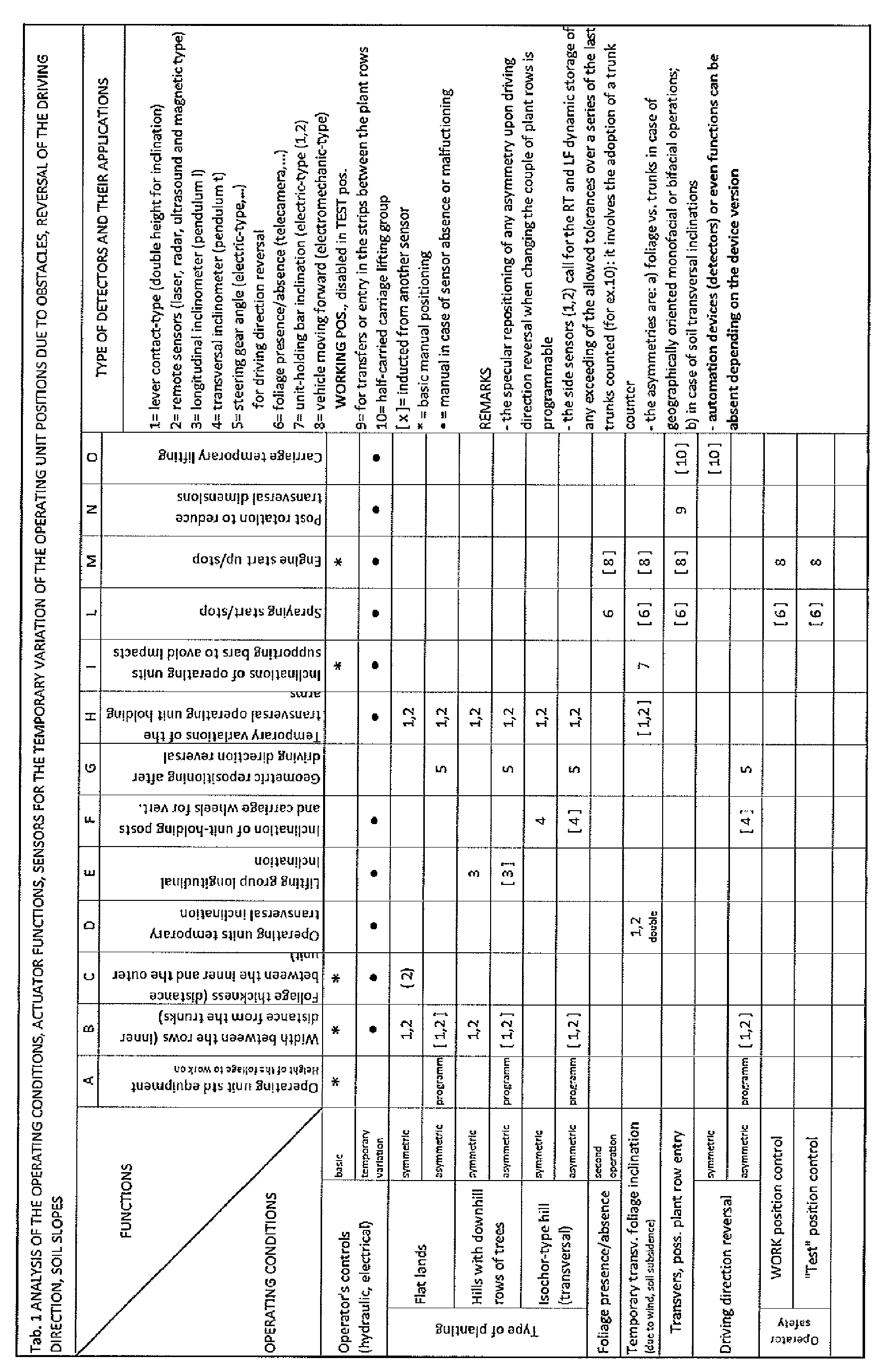

## Claims

1. Multifunction bilateral articulated agricultural equipment being the basic element for the support and handling, by means of extensible and inclinable arms, of different devices operating in specular couples and working on parallel vineyard or orchard rows of hill or flatland plantings, to be fitted onto self-propelled vehicles (tractors/others) moving between rows of trees and incorporating a parallelogram-shaped transversal structure capable to be widened and deformed, supporting and keeping in a vertical position two extensible side posts (right and left), each one having a head above and capable to come equipped with different groups, even those assuring the automatic temporary repositioning of the couples of operating units, in order to meet the variable specific needs [tab.1], while reducing costs as much as possible.

2. Supporting equipment per C.1 in the version for employment also in case of hilly contour line plantings, where the transversal structure supporting the side posts is composed of a deformable parallelogram, the upper side of which is fixed onto the self-propelled vehicle, while the lower one can move transversally like a pendulum, thus basically keeping the structure parallel to the sloping ground thanks to at least one double action hydraulic jack controlled either by the operator or an automatic unit (inclinometer), so as to always guarantee the verticality of the side posts and keep the operating units in the proper position.

3. Supporting equipment as per C. 1, 2 featuring the variable width of the deformable parallelogram supporting the side posts, as both the upper and the lower transversal bars are composed of reciprocally and manually sliding sections fixed by means of bolts; in the servo-controlled versions the above sections slide thanks to double action hydraulic jacks, so as to suit the tree row strip width.

4. Device as per the above C. - and particularly C.2 - featured, in the version with the automatic management of the side posts vertical position, by the adoption of an inclinometer, the function of which can be shown by a damper-equipped oscillating pendulum, acting on an inclination linear difference sensor (fig. 2), which, thanks to an electronic cabinet, controls the position to be reached by the double action hydraulic jack/s driving the deformable parallelogram lower bar, while checking its/their correct operation.

5. Device as per the above C. featuring two free tyres in contact with the ground placed under the side posts, which are kept in a vertical position, so that, when moving downhill along contour line plantings, the deformable parallelogram lower bar and the wheels below improve the structure stability (fig. 3).

6. Device as per the above C. and particularly C.5 featuring, in case of hilly contour line plantings, the possibility to equip the tyres with rigid thin vertical disks having a continuous or notched edge, placed along a diameter similar to the tyres' outer one, in order to prevent sliding downhill.

7. Device as per claim 1 featuring the extensible telescope-type vertical side posts driven by hydraulic jacks controlled by the operator, so as to even independently adjust themselves to the right and left tree row height.

8. Device as per the above claims with the specular heads above the right and left side posts capable to be inclined transversally, each one independently controlled by means of electro-mechanic mechanisms (see fig. 3) (ex. worm screw/crown gear couple), or of a double action hydraulic jack having the same function (see fig. 5), in case of local (temporary) transversal inclinations of the trees (trunks and foliages) with respect to the vertical line, i.e. the side post/s.

9. Heads fitted above the right and left side vertical posts, each one incorporating a sleeve housing an arm being transversal with respect to the tree row and capable to be extended / shortened thanks to either a rack and spool-type electro-mechanic device (fig. 4), or a double action hydraulic jack (fig. 5) for the support and positioning of the unit operating on the inner side (face) of the tree row, or of the couple of units working on both sides of the tree row moving them at the same time with a single action.

10. Right or left arm as per C. 9 overlaying the tree row, supporting and handling a specular couple of operating units as per C.9, with the outer one hanging from a coupling-equipment, which slides along the arm thanks to a rear-placed double action hydraulic jack (fig. 5, 8) so as to suit the foliage width, and is properly positioned by the operator through a hydraulic distributor before starting the job.

11. Articulated bilateral agricultural support device as per C.1 capable to come equipped in different versions and automatic features as to the position temporary variations, depending on the user's requirements, i.e.: 1) with the various controls managed only by the operator, 2) with positioning automation devices driven by sensors (for ex. of the distance of the operating units from the trunks and/or of their inclination) and controls processed by a programmable electronic cabinet, featured by the installation of sensor/s (fig. 10 and 11) ahead of the operating units, so as to enable the servo-mechanisms to correct the positions of the operating unit supports, without slowing down the vehicle.

12. Device featuring automation controls handling the inclination variation of the heads above the side posts and/or the coming out of the operating unit holding arms overlaying the tree rows composed of remote sensor/s (laser, ultrasound or other types of sensors) capable to detect on the right and left sides at a minimum of two different heights from the ground the distance between the operating units and the trunks and the possible differences due to inclinations and managed by a suitable programmable electronic cabinet capable to process the relevant data, inform the operator and provide inputs to the servo-mechanisms as to the repositioning of the operating units, while controlling the correct execution of the job.

13. Device capable to be employed on flatland plantings incorporating a single horizontal-axis laser sensor fitted on the front side of the tractor and detecting the distances on both right and left sides, with the acceptable detection range (minimum and maximum height from the ground) being capable to vary thanks to the electronic cabinet software.

14. Device in the version for employment in hilly contour line plantings, i.e. featured by vine trunks at different heights on the right and left sides, equipped with a couple of right and left sensors placed ahead of the vertical side posts, capable to detect the distances, one on each side, and having a variable acceptable detection range, as per C.13.

15. Agricultural equipment as per the above claims featuring the possibility to make the side post heads rotate by 90° manually / by means of double action hydraulic jacks controlled by the operator, so as to reduce the device transversal dimensions during transfers.
